Europäisches Patentamt

European Patent Office

Office européen des brevets

(19)

(11) Veröffentlichungsnummer: **0 030 659**
**B1**

(12)

# EUROPÄISCHE PATENTSCHRIFT

(45) Veröffentlichungstag der Patentschrift:
**20.06.84**

(51) Int. Cl.³: **G 01 D 11/30,** H 04 N 5/04

(21) Anmeldenummer: **80107397.4**

(22) Anmeldetag: **26.11.80**

(54) **Schwenkeinrichtung für ein einen Sockel und ein Chassis enthaltendes Gerät.**

(30) Priorität: **30.11.79 DE 2948354**

(43) Veröffentlichungstag der Anmeldung:
**24.06.81 Patentblatt 81/25**

(45) Bekanntmachung des Hinweises auf die Patenterteilung:
**20.06.84 Patentblatt 84/25**

(84) Benannte Vertragsstaaten:
**AT BE CH FR GB IT LI LU NL SE**

(56) Entgegenhaltungen:
**GB - A - 1 113 674**
**US - A - 2 924 495**

(73) Patentinhaber: **SIEMENS AKTIENGESELLSCHAFT,
Berlin und München Wittelsbacherplatz 2,
D-8000 München 2 (DE)**

(72) Erfinder: **Hahn, Hans, Bussardstrasse 4,
D-8025 Unterhaching (DE)**

ACTORUM AG

## Beschreibung

Die Erfindung bezieht sich auf eine Schwenkeinrichtung für ein einen Sockel und ein Chassis enthaltendes Datensichtgerät entsprechend dem Oberbegriff des Patentanspruchs.

Um Bürogeräte in ihrer Lage zu einem Bearbeiter einstellen zu können, muss zumindest ein Teil des Gerätes schwenkbar sein. Dies ist z.B. bei Datensichtgeräten erforderlich. Hier muss die Bildschirminformation verzerrungsfrei erkannt werden können, dazu muss der Betrachter senkrecht auf den Bildschirm blicken können. Wegen der Variationsbreite menschlicher Körpermasse erfordert dies entweder höhenverstellbare oder schwenkbare Bildschirme. Reflexblendungen und Spiegelungen durch Deckenleuchten, helle oder glänzende Gegenstände aus der Umgebung des Arbeitsplatzes im Bildschirm können durch Schwenken der Bildröhre zusätzlich gemindert werden.

Aus der US-A-2 924 495 ist ein Gehäuse für ein Messinstrument bekannt, welches von zwei Stützen getragen und mittels zweier Gelenke schwenkbar auf den Stützen gelagert ist. Die Gelenke bestehen jeweils aus einem durch die Stützen geführten Bolzen, der mit der Stirnseite an der Gehäusewand anliegt, und aus einer konzentrisch in die Stirnseite eingedrehten, durch die Gehäusewand geführten Schraube. Am freien Ende des Bolzens sitzt ein Drehgriff, dessen Stirnseite in einem verriegelten Zustand von einer, sich am verbreiterten Kopf des Bolzens abstützenden Druckfeder gegen die Stütze gedrückt wird, und sie auf diese Weise mit der Gehäusewand verspannt. Dabei sind an den Druckflächen zwischen Drehgriff und Stütze einerseits und zwischen Stütze und Gehäusewand andererseits jeweils Reibscheiben angebracht.

Ferner ist aus der genannten US-A-2 924 495 eine Verriegelungseinrichtung bekannt, die aus einem den Bolzen quer durchdringenden, mit seinen Enden herausragenden Stift und aus einem an der Stirnseite des Drehgriffs angebrachten Bund besteht. Dieser wird im entriegelten Zustand von der Druckfeder gegen den Stift gepresst, und hält dadurch die Stirnseite des Drehgriffs ausser Eingriff mit der Stütze. In dem Bund sind Kerben eingelassen, die nach einer Drehung des Drehgriffs den Stift aufnehmen, wodurch die Sperrung der Druckfeder aufgehoben wird. Dabei dringt der Bund unter einer axialen Bewegung des Drehgriffs in eine Buchse in der Stütze ein, wobei die Stirnseite in Reibkontakt mit der Stütze gelangt, so dass das Gelenk verriegelt ist.

Die der Erfindung zugrundeliegende Aufgabe besteht darin, eine Schwenkeinrichtung für ein einen Sockel und ein Chassis enthaltendes Gerät anzugeben, die auf einfache Weise aufgebaut ist und trotzdem ein einwandfreies Schwenken der Chassis gegenüber dem Sockel ermöglicht. Diese Aufgabe wird bei einer Schwenkeinrichtung der oben angegebenen Art durch die im kennzeichnenden Teil des Patentanspruchs angegebenen Merkmale gelöst.

Anhand eines Ausführungsbeispiels, das in den Figuren dargestellt ist, wird die Erfindung weiter erläutert.

Es zeigen:

Fig. 1 die Seitenansicht eines Gerätes, z.B. eines Datensichtgerätes,

Fig. 2 einen Schnitt durch die Schwenkeinrichtung in vergrösserter Darstellung.

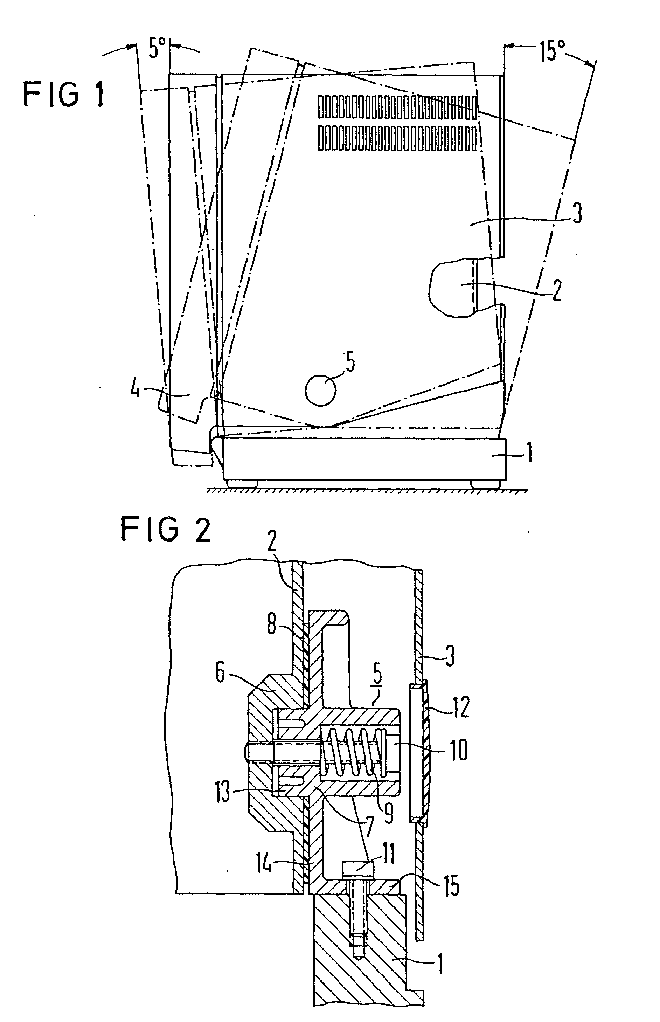

Fig. 1 zeigt in Seitenansicht ein Gerät, z.B. ein Datensichtgerät, bei dem ein Chassis 2 des Gerätes gegenüber einem Sockel 1 stufenlos schwenkbar ist. Dazu ist das Chassis 2 beidseitig drehbar an dem Sockel 1 gelagert. Das Chassis 2, z.B. der Geräteteil eines Datensichtgerätes, ist von einem Gehäuse 3 abgedeckt und zusätzlich mit einer Blende 4 versehen. In Fig. 1 sind drei Stellungen der Chassis 2 mit dem Gehäuse 3 dargestellt, eine Stellung ist ausgezogen, zwei Stellungen sind gestrichelt ausgeführt. Gegenüber der ausgezogenen Stellung, bei der das Chassis 2 gegenüber einer Standfläche geradesteht, ist die zweite Stellung um z.B. 5° nach vorne geneigt und die dritte Stellung z.B. um 15° nach hinten geneigt. Der Sockel 1, der auf einer Standfläche steht, ist etwas nach oben gezogen, so dass das Gehäuse 3 bei der Schwenkung nach vorne das Chassis nicht freigeben kann.

Der Aufbau der Schwenkeinrichtung, die ein Schwenken des Chassis 2 gegenüber dem Sockel 1 ermöglicht, ergibt sich insbesondere aus Fig. 2. Dabei ist die Schwenkeinrichtung zweckmässigerweise beidseitig und schwerpunktmässig in dem Chassis 2 gelagert, um das zum Schwenken erforderliche Drehmoment weitgehendst konstant zu halten. Der Schwenkbereich kann durch nicht dargestellte Gehäuseanschläge begrenzt werden.

Nach Fig. 2 besteht die Schwenkeinrichtung aus einem Lagerbock 7, einer in dem Chassis 2 angeordneten Lagerbuchse 6 und einer Reibscheibe 8. Der Lagerbock 7 ist über eine Schraube 11 mit dem Sockel 1 fest verschraubt. Dazu ist er mit einem Winkel 14 versehen, der einen Arm 15 aufweist, der auf dem Sockel 1 aufliegt. Der Arm 15 ist mit dem Sockel 1 fest verschraubt.

Der Lagerbock 7 ist weiterhin mit einem Zapfen 13 versehen, der in die Lagerbuchse 6 hineinragt. Die Lagerbuchse 6 und damit das Chassis 2 liegt somit auf dem Zapfen 13 auf und kann auf dem Zapfen 13 gedreht werden. Um das Chassis 2 nach der Drehung in einer Lage festzustellen, ist die Reibscheibe 8 zwischen dem Lagerbock 7 und dem Chassis 2 angeordnet. Der Druck, den das Chassis 2 und der Lagerbock 7 auf die Reibscheibe 8 ausüben, wird mit Hilfe einer Druckschraube 10 und einer Druckfeder 9 erreicht. Die Druckschraube 10 wird dabei in ein zentrisch in der Lagerbuchse 6 angeordnetes Gewinde hineingeschraubt. Dabei wird die Druckfeder 9 zusammengepresst mit der Folge, dass auf die Reibscheibe 8 ein erhöhter Druck ausgeübt wird. Das axiale Spiel des Zapfens 13 in der Lagerbuchse 6 soll dabei grösser gleich der Dicke der Reibscheibe 8 sein, um ein Anstossen des Zapfens an der Innenfläche der Lagerbuchse 6 zu verhindern.

Die Druckschraube 10 verbindet den Lagerbock 7 mit den Chassis 2, so dass ein Lösen der Chassis 2 von dem Lagerbock 7 und damit von dem Sockel 1 nicht möglich ist.

Es ist zweckmässig, auf beiden Seiten der Chassis 2 jeweils eine Schwenkeinrichtung anzuordnen. Dann wird eine gleichmässige Anlage der Reibscheiben 8 auf beiden Seiten der Chassis 2 durch entsprechend dimensionierte Druckfedern 9 und ein im elastischen Bereich verformbares Blechchassis gewährleistet. Mit Hilfe der Druckschraube 10 kann die Kraft der Druckfeder 9 und damit das Reibmoment verändert werden, wenn der Verschleiss der Reibscheibe 8 dies erforderlich macht.

Der Zugang zur Schwenkeinrichtung ist durch eine im Gehäuse 3 angeordnete Kappe 12 abgedeckt. Damit ist ein einfacher Zugang zur Schwenkeinrichtung 5 möglich.

**Patentanspruch**

Schwenkeinrichtung für einen Sockel (1) und ein Chassis (2) aufweisendes Datensichtgerät, bei welchem das Chassis an einander gegenüberliegenden Seiten schwenkbar in jeweils einem am Sockel befestigten Lagerbock (7) mittels jeweils eines Gelenks (6, 13) gehalten ist, wobei im Bereich der Gelenke jeweils eine Reibscheibe (8) vorgesehen ist, die jeweils mittels einer Druckfeder (9) und einer die Druckfeder vorspannenden, im Chassis gehalterten Druckschraube (10) zwischen Lagerbock und Chassis einklemmbar ist, dadurch gekennzeichnet, dass jeder Lagerbock (7) einen Zapfen (13) aufweist, der jeweils in eine im Chassis (2) vorgesehene Lagerbuchse (6) gesteckt ist, und dass die Druckschraube (10) axial durch den Zapfen (13) hindurch zentrisch in den Boden der Lagerbuchse (6) eingeschraubt ist.

**Claim**

Pivoting device for a data display device which includes a base (1) and a chassis (2) and wherein the chassis is pivotably retained on opposite sides in a bearing block (7) which is secured to the base by means of a hinge (6, 13), where in the region of the hinges, there is respectively arranged a friction disc (8) which can be clamped between bearing block and chassis by means of a compression spring (9) and a compression screw (10) which pre-loads the compression spring and is held in the chassis, characterised in that each bearing block (7) has a pin (13) which is plugged into a bearing bush (6) arranged in the chassis (2), and that the compression screw (10) is screwed axially through the pin (13) and centrally into the base of the bearing bush (6).

**Revendication**

Dispositif de pivotement pour un appareil de visualisation de données, comportant un socle (1) et un châssis (2), dans lequel le châssis est maintenu, pivotant sur des côtés opposés, à l'aide de respectivement une articulation (6, 13) dans respectivement un support de palier (7) fixé à un socle, des disques de friction (8) étant respectivement prévus au niveau des articulations et étant chacun susceptible d'être bloqué entre le support de palier et le châssis à l'aide d'un ressort de pression (9) et d'une vis de pression (10) préarmant le ressort de pression, caractérisé par le fait que chaque support de palier (7) comporte un tourillon (13) qui est monté dans un coussinet de palier (6), et que la vis de pression (10) est vissée à travers le tourillon (13), en position centrale, dans le fond du coussinet de palier (6).

FIG 1

5°

15°

3

2

5

4

1

FIG 2

2

8

3

6

5

12

10

13

9

7

11

14

15

1